# EUROPEAN PATENT APPLICATION

(11) **EP 2 131 624 A1**
(43) Date of publication of application: **09.12.2009**
(21) Application number: 09007313.1
(22) Date of filing: 02.06.2009
(51) Int. Cl.: H04W 76/06

(54) **Method and apparatus for handling semi-persistent transmission resource**

(30) Priority: 03.06.2008 US 58215 P
(71) Applicant: Innovative Sonic Limited, Tortola (VG)
(72) Inventor: Kuo, Richard Lee-Chee, Taipei City Taiwan (TW)
(74) Representative: Hager, Thomas Johannes

(57) **Abstract**

The present invention provides a method for handling semi-persistent transmission resources in a user equipment, named UE hereinafter, of a wireless communication system. The method includes steps of obtaining semi-persistent transmission resources allocated to the UE (410), and releasing the semi-persistent transmission resources when a Time Alignment Timer in the UE expires (420).

## Description

The present invention relates to a method and apparatus for handling semi-persistent transmission resources in a user equipment (UE) of a wireless communication system according to the pre-characterizing clauses of claims 1 and 8.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in base stations (Node Bs) alone rather than in Node Bs and RNC (Radio Network Controller) respectively, so that the system structure becomes simple.

In LTE system, a user equipment (UE) needs to be synchronized with a serving base station, i.e. the serving Node B, on uplink timing to prevent signals transmitted from the UE from colliding with those sent from other UEs under the coverage of the base station. A Time Alignment Timer of the UE is utilized for indicating whether the UE is synchronized with the base station on uplink timing. When the Time Alignment timer is running, uplink timing is considered synchronized. If the Time Alignment timer expires, then this indicates that the UE no longer has uplink synchronization with the base station. Besides, a Timing Alignment Command is transmitted by the base station to update a Timing Advance value of the UE for maintenance of uplink time alignment. Whenever the Timing Advance value is updated, the UE shall start or restart the Time Alignment timer. Definition of the Timing Advance value can be referred in related specifications, and is not given herein.

According to the current specification, when the Time Alignment timer is not running or has expired, prior to any uplink transmission, the UE shall use a Random Access Procedure to obtain the Timing Alignment Command in order to obtain uplink time alignment. This indicates the UE should not perform any uplink transmission when the uplink timing of the UE becomes non-synchronized.

On the other hand, a Semi-Persistent Scheduling (SPS) function is introduced into the MAC layer, for providing semi-persistent transmission resources to upper layer applications which generate semi-static size data periodically, e.g. VoIP services, in order to make the UE use Shared Channel (SCH) resources more efficiently. According to the current specification, when the base station wants to allocate semi-persistent transmission resources to the UE, it will deliver the periodicity of the semi-persistent transmission resources via a Radio Resource Control (RRC) signaling first, and then activate or modify the semi-persistent transmission resources via a Physical Downlink Control Channel (PDCCH) signaling addressed to a SPS Cell Radio Network Temporary Identifier (C-RNTI) of the UE.

Generally, the semi-persistent transmission resources can be released implicitly or explicitly. For example, the base station can explicitly indicate the UE to release the activated semi-persistent transmission resources by a PDCCH signaling. However, the prior art does not specify any action the UE should take to the semi-persistent transmission resources when the Time Alignment timer expires. As a result, the UE may still perform uplink transmission in a non-synchronization state based on the semi-persistent transmission resources, and it may cause interference to uplink transmissions from other UEs.

This in mind, the present invention aims at providing a method and apparatus for handling semi-persistent transmission resources in a UE of a wireless communications system, so as to avoid uplink transmission in a non-synchronized state that causes interference to uplink transmissions from other UEs.

This is achieved by a method and apparatus for handling semi-persistent transmission resources in a user equipment (UE) of a wireless communication system according to the pre-characterizing clauses of claims 1 and 8. The dependent claims pertain to corresponding further developments and improvements.

As will be seen more clearly from the detailed description following below, the claimed method for handling semi-persistent transmission resources in a user equipment (UE) of a wireless communication system includes steps of obtaining a semi-persistent transmission resources allocated to the UE; and releasing the semi-persistent transmission resources when a Time Alignment Timer of the UE expires.

In the following, the invention is further illustrated by way of example, taking reference to the accompanying drawings. Thereof
FIG.1 is a schematic diagram of a wireless communications system.
FIG.2 is a function block diagram of a wireless communications device.
FIG.3 is a diagram of program code of FIG.2.
FIG.4 is a flowchart of a process according to an embodiment of the present invention.

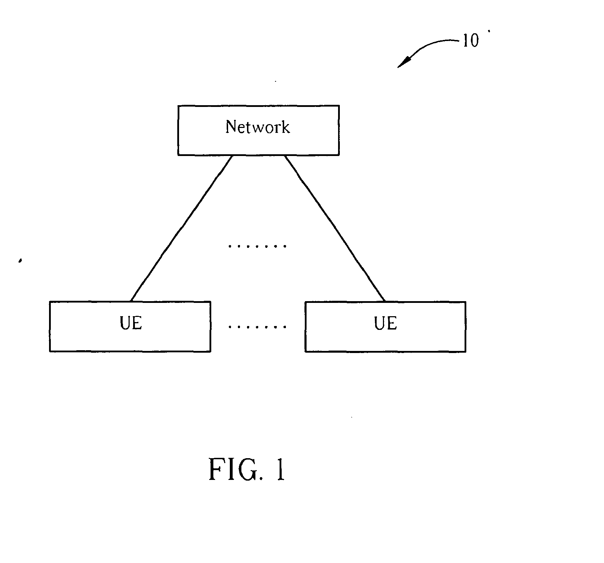

Please refer to FIG.1, which illustrates a schematic diagram of a wireless communications system 10. The wireless communications system 10 is preferred to be an LTE (long-term evolution) system, and is briefly composed of a network and a plurality of user equipments (UEs). In FIG.1, the network and the UEs are simply utilized for illustrating the structure of the wireless communications system 10. Practically, the network may comprise a plurality of base stations (Node Bs), radio network controllers and so on according to actual demands, and the UEs can be devices such as mobile phones, computer systems, etc.

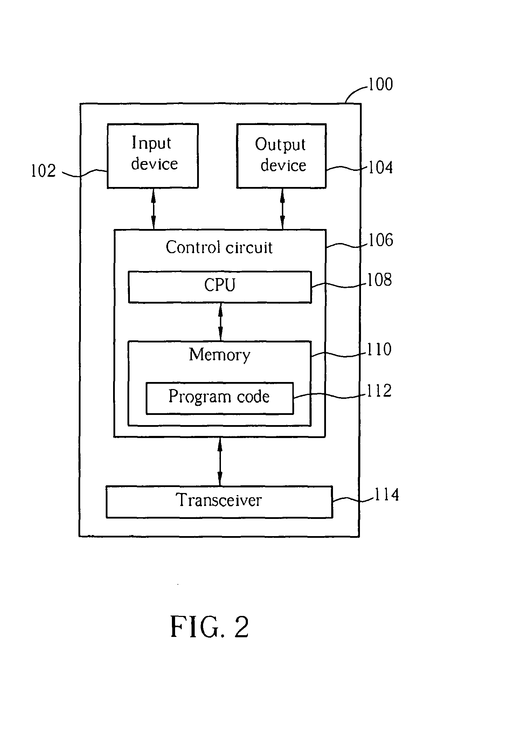

Please refer to FIG.2, which is a functional block diagram of a communications device 100 in a wireless communications system. The communications device 100 can be utilized for realizing the UEs in FIG.1, and the wireless communications system is preferably the LTE system. For the sake of brevity, FIG.2 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3.

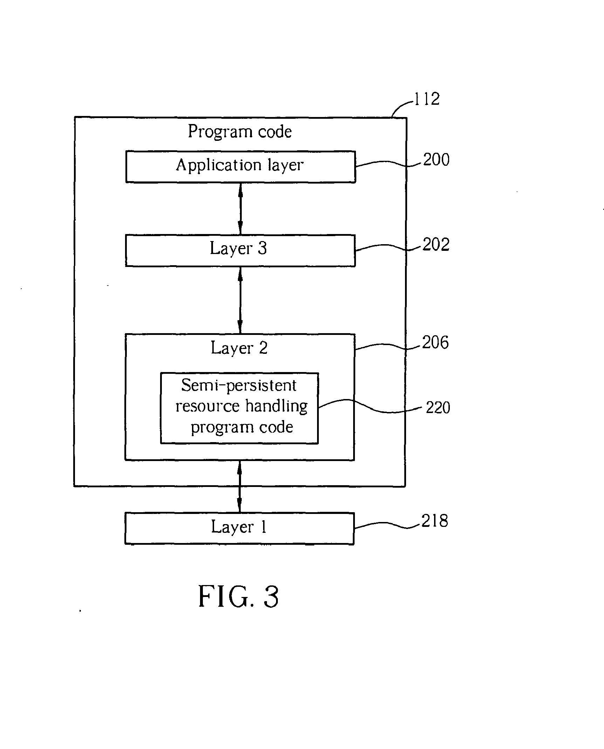

Please continue to refer to FIG.3. FIG.3 is a diagram of the program code 112 shown in FIG.2. The program code 112 includes an application layer 200, a Layer 3 202, and a Layer 2 206, and is coupled to a Layer 1 218. The Layer 3 202 performs radio resource control. The Layer 2 206 comprises a Radio Link Control (RLC) layer and a Medium Access Control (MAC) layer, and performs link control. The Layer 1 218 performs physical connections.

In the LTE system, the MAC layer utilizes a Time Alignment Timer for indicating whether the UE is synchronized with the base station on uplink timing. When the Time Alignment timer is running, uplink timing is considered synchronized. Conversely, if the Time Alignment timer expires, then this indicates that the UE no longer has uplink synchronization with the base station. In addition, the MAC layer includes a Semi-Persistent Scheduling (SPS) function, for providing semi-persistent transmission resources to upper layer applications which generate semi-static size data periodically, e.g. VoIP services, so as to make the UE use Shared Channel (SCH) resources more efficiently.

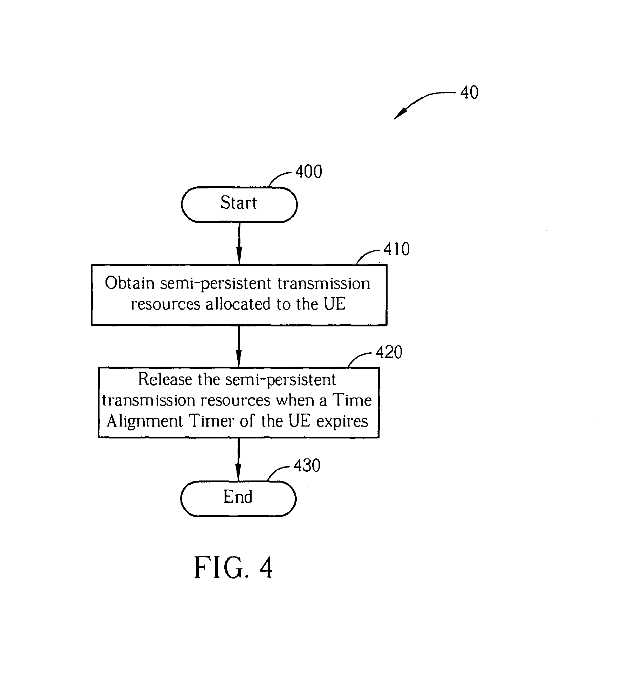

In such a situation, the embodiment of the present invention provides a semi-persistent resource handling program code 220 for handling semi-persistent transmission resources of the UE when the Time Alignment Timer expires, so as to avoid uplink transmission in a non-synchronized state that may cause interference to uplink transmissions from other UEs. Please refer to FIG.4, which illustrates a schematic diagram of a process 40. The process 40 is utilized for handling semi-persistent transmission resources in a UE of the wireless communications system 10, and can be compiled into the semi-persistent resource handling program code 220. The process 40 includes the following steps:
Step 400: Start.
Step 410: Obtain semi-persistent transmission resources allocated to the UE.
Step 420: Release the semi-persistent transmission resources when a Time Alignment Timer of the UE expires.
Step 430: End.

According to the process 40, after obtaining the semi-persistent transmission resources, if uplink timing of the UE becomes non-synchronized, i.e. the Time Alignment Timer of the UE expires, the UE shall release the allocated semi-persistent transmission resources. Therefore, the embodiment of the present invention can prevent the UE from performing uplink transmission in the non-synchronization state, which may cause interference to uplink transmissions from other UEs.

Preferably, in Step 410, the UE can configure the periodicity of the semi-persistent transmission resources according to a Radio Resource Control (RRC) signaling, and activate or modifie the semi-persistent transmission resources according to a Physical Downlink Control Channel (PDCCH) signaling addressed to a Semi-Persistent Scheduling Cell Radio Network Temporary Identifier (SPS C-RNTI) of the UE, so as to obtain the semi-persistent transmission resources. Related operation can be found in the prior art, and is not further described herein.

Please note that, in the embodiment of the present invention, the said semi-persistent transmission resources are not limited to uplink transmission resources or downlink transmission resources. If the semi-persistent transmission resources are for uplink transmission, releasing the semi-persistent transmission resources stops the UE from using the semi-persistent transmission resources to perform uplink transmission in the non-synchronization state. Conversely, if the semi-persistent transmission resources are for downlink transmission, releasing the semi-persistent transmission resources then avoids the UE from reporting ACK or NACK control information corresponding to downlink transmission via a Physical Uplink Control Channel (PUCCH) in the non-synchronization state. Therefore, uplink transmissions or control information sent from other UEs can be prevented from being interfered.

In summary, the embodiment of the present invention releases the semi-persistent transmission resources when the Time Alignment Timer of the UE expires, to avoid the UE from performing uplink transmission or reporting control information in the non-synchronization state. Consequently, the embodiment of the present invention can prevent signals transmitted from the UE from colliding with those sent from other UEs under the coverage of the base station.

## Claims

1. A method for handling semi-persistent transmission resources in a user equipment, named UE hereinafter, of a wireless communication system, the method comprises:
obtaining semi-persistent transmission resources allocated to the UE (410); and
**characterized by** releasing the semi-persistent transmission resources when a Time Alignment Timer of the UE expires (420).

2. The method of claim 1, **characterized in that** the semi-persistent transmission resources are transmission resources that can be used periodically after being obtained by the UE from the network.

3. The method of claim 1, **characterized in that** the UE starts or restarts the Time Alignment Timer when a Timing Advance value of the UE is configured or updated.

4. The method of claim 1, **characterized in that** the semi-persistent transmission resources are for uplink transmission.

5. The method of claim 1, **characterized in that** the semi-persistent transmission resources are for downlink transmission.

6. The method of claim 1, **characterized in that** the step of obtaining the semi-persistent transmission resources allocated to the UE (410) comprises:
configuring periodicity of the semi-persistent transmission resources according to a Radio Resource Control, named RRC hereinafter, signaling.

7. The method of claim 1, **characterized in that** the step of obtaining the semi-persistent transmission resources allocated to the UE (410) comprises:
activating the semi-persistent transmission resources according to a Physical Downlink Control Channel, named PDCCH hereinafter, signaling addressed to a Semi-Persistent Scheduling Cell Radio Network Temporary Identifier, named SPS C-RNTI hereinafter, of the UE.

8. A communication device (100) for handling semi-persistent transmission resources in a user equipment, named UE hereinafter, of a wireless communication system, the communication device (100) comprising:
a processor (108) for executing a program code (112); and
a memory (110) coupled to the processor (108) for storing the program code (112); the program code (112) comprises:
obtaining semi-persistent transmission resources allocated to the UE (410); and
**characterized by** releasing the semi-persistent transmission resources when a Time Alignment Timer of the UE expires (420).

9. The communication device (100) of claim 8, **characterized in that** the semi-persistent transmission resources are transmission resources that can be used periodically after being obtained by the UE from the network.

10. The communication device (100) of claim 8, **characterized in that** the UE starts or restarts the Time Alignment Timer when a Timing Advance value of the UE is configured or updated.

11. The communication device (100) of claim 8, **characterized in that** the semi-persistent transmission resources are for uplink transmission.

12. The communication device (100) of claim 8, **characterized in that** the semi-persistent transmission resources are for downlink transmission.

13. The communication device (100) of claim 8, **characterized in that** the step of obtaining the semi-persistent transmission resources allocated to the UE (410) comprises:
configuring periodicity of the semi-persistent transmission resources according to a Radio Resource Control, named RRC hereinafter, signaling.

14. The communication device (100) of claim 8, **characterized in that** the step of obtaining the semi-persistent transmission resources allocated to the UE (410) comprises:
activating the semi-persistent transmission resources according to a Physical Downlink Control Channel, named PDCCH hereinafter, signaling addressed to a Semi-Persistent Scheduling Cell Radio Network Temporary Identifier, named SPS C-RNTI hereinafter, of the UE.
